Europäisches Patentamt

European Patent Office

Office européen des brevets

(19)

(11) Numéro de publication : **0 179 521**
**B1**

(12) **FASCICULE DE BREVET EUROPÉEN**

(45) Date de publication du fascicule du brevet :
11.01.89

(51) Int. Cl.⁴ : **B 29 C 47/04**, B 29 C 47/16

(21) Numéro de dépôt : **85201630.2**

(22) Date de dépôt : **08.10.85**

(54) **Bloc d'alimentation réglable pour filière de coextrusion.**

(30) Priorité : **18.10.84 FR 8416100**

(43) Date de publication de la demande :
**30.04.86 Bulletin 86/18**

(45) Mention de la délivrance du brevet :
**11.01.89 Bulletin 89/02**

(84) Etats contractants désignés :
**AT BE CH DE FR GB IT LI NL SE**

(56) Documents cités :
**EP--A-- 0 010 895**
**DE--A-- 2 554 239**
**FR--A-- 2 437 289**
**US--A-- 3 829 274**
**US--A-- 4 476 080**

(73) Titulaire : **SOLVAY & Cie (Société Anonyme)**
**Rue du Prince Albert, 33**
**B-1050 Bruxelles (BE)**

(72) Inventeur : **Dehennau, Claude**
**Chemin des Postes, 236**
**B-1410 Waterloo (BE)**
Inventeur : **Dubois, Paul**
**Chemin des Bénédictines, 29**
**B-7822 Ghislenghien (BE)**

Jouve. 18. rue St-Denis. 75001 Paris. France

## Description

La présente invention concerne un bloc d'alimentation réglable pour filière de coextrusion selon le préambule de la revendication 1. Un tel bloc d'alimentation, qui est connu du document DE-A-2 554 239 est particulièrement adapté pour la production en continu d'articles tels que des profilés en matière thermoplastique comportant localement au moins une couche d'enduction telle que, par exemple, une couche de protection ou une couche de décoration.

Lors de la production d'articles extrudés, tels que des profilés utilisés notamment pour la réalisation de châssis de portes ou de fenêtres, il est souhaitable de pouvoir disposer de profilés comportant localement une couche superficielle d'enduction assurant une protection et/ou une décoration des profilés. Ainsi, par exemple, il est souhaitable que la face du profilé qui sera appelée ultérieurement à être exposée au rayonnement solaire soit protégée efficacement par une couche d'enduction contenant des agents anti-UV, ainsi qu'il est proposé notamment dans le brevet FR-A-1571391. Par ailleurs, on peut également souhaiter disposer de profilés bicolores présentant un certain effet décoratif et ce, en appliquant superficiellement une ou plusieurs couches locales d'enduction ayant une coloration différente de la matière thermoplastique constitutive du profilé.

Afin de pouvoir réaliser de tels produits, il a déjà été proposé dans le brevet BE-A-805066 d'utiliser une tête d'extrusion équipée d'une filière appropriée dans laquelle la zone de sortie de la filière est équipée localement d'un canal débitant la couche d'enduction et d'une tôle ou plaque de réglage permettant de contrôler l'épaisseur de la couche d'enduction déposée localement sur le profilé extrudé.

Dans le dispositif selon ce brevet, il est toutefois nécessaire pour un même profilé produit de changer la filière et de procéder à un nouveau réglage si l'on désire en cours de production modifier la localisation et/ou la largeur de la couche d'enduction et, en conséquence, de procéder à un nettoyage de filière. En outre, le passage à un autre type de profilé implique également une opération assez longue de changement de filière et de réglage. De plus, la présence d'une plaque ou tôle de réglage d'épaisseur risque d'entraîner des stagnations de matière thermoplastique fondue et partant des risques de dégradation thermique de cette matière thermoplastique particulièrement lorsque celle-ci est thermosensible. Enfin, l'équipement nécessaire avec le dispositif selon ce brevet est onéreux car il implique de disposer d'une série de filières très élaborées et donc très coûteuses.

Dans la demande de brevet DE-A-2554239, on divulgue déjà un bloc d'alimentation réglable pour filière de coextrusion qui comprend un canal central pour convoyer un flux principal de matière thermoplastique fondue vers une filière de coextrusion et un canal secondaire substantiellement parallèle au canal central pour convoyer une seconde matière thermoplastique fondue destinée à former une couche d'enduction du flux principal, l'extrémité d'aval du canal secondaire étant inclinée par rapport au canal central et raccordée à la périphérie de celui-ci. En outre, dans le bloc divulgué, la paroi externe de l'extrémité inclinée d'un canal secondaire est constituée par un anneau déplaçable transversalement permettant notamment ainsi qu'il apparaît à la figure 4 d'excentrer la couche d'enduction par rapport au flux principal de matière thermoplastique. Avec le dispositif tel que divulgué il n'est toutefois pas possible de réaliser un profilé équipé localement d'une couche d'enduction dont la largeur et la localisation peuvent être réglées en continu.

La présente invention a pour objet de remédier aux désavantages précités et de fournir un bloc d'alimentation réglable pour filière de coextrusion qui permet, en cours de fonctionnement, un réglage continu de la localisation et de la largeur d'une couche d'enduction sans aucune modification de la filière et ce en minimisant les risques de dégradation thermique des matières thermoplastiques débitées.

La présente invention concerne dès lors un bloc d'alimentation réglable pour filière de coextrusion comprenant un canal central principal pour convoyer un flux principal de matière thermoplastique fondue vers une filière de coextrusion et au moins un canal secondaire substantiellement parallèle au canal central pour convoyer une seconde matière thermoplastique fondue destinée à former une couche d'enduction locale du flux principal, l'extrémité aval de chaque canal secondaire étant inclinée par rapport au canal central et raccordée sur une portion de la périphérie de ce canal, ledit bloc d'alimentation se caractérisant en ce que le raccordement entre le canal principal et chaque canal secondaire est délimité latéralement par les extrémités de deux tiroirs réglables déplaçables perpendiculairement à l'axe du canal central.

Dans le bloc d'alimentation selon la présente invention, le ou les flux de matière thermoplastique fondue convoyés par le ou les canaux secondaires sont donc appliqués sur le flux de matière thermoplastique fondue principale selon une largeur et selon un positionnement qui sont fonction du réglage des tiroirs déplaçables disposés au niveau du raccordement. Ce positionnement des tiroirs déplaçables peut être effectué en cours de fonctionnement du dispositif en fonction du profil de la filière de coextrusion montée en aval du bloc d'alimentation et en fonction de la partie du profilé extrudé sur laquelle on désire appliquer la couche d'enduction coextrudée. Ainsi, lors de la production de profilés pour châssis de fenêtres qui sont symétriques, on peut régler les tiroirs mobiles de façon telle que les flux de matière thermoplastique débités par les canaux secondaires se déposent sur le flux principal de matière thermoplastique symétriquement par rapport au plan de symétrie vertical du canal d'écoulement de ce flux principal et, lors de la production de profilés pour châssis de fenêtres asymétriques, on peut régler les tiroirs de façon telle que les flux de matière thermoplastique débités par les canaux secondaires se déposent sur le flux principal de matière thermoplastique asymétriquement par rapport au plan de symétrie vertical du canal d'écoulement principal, le positionnement des tiroirs pouvant être modifié à tout moment en cours de production pour corriger tout défaut de positionnement correct de la ou des couches d'enduction qui pourrait apparaître sur le produit coextrudé.

Selon un mode de réalisation qui se révèle avantageux, l'axe du canal central et les axes des extrémités aval de chaque canal secondaire forment entre eux un angle compris entre 30 et 60° de façon à assurer une mise en contact progressive des flux de matière thermoplastique débités par ces canaux.

Selon un autre mode de réalisation, le canal central de section substantiellement circulaire est aplati au niveau du raccordement de chaque canal secondaire avec le canal central afin d'éviter tout infiltration de matière thermoplastique fondue au droit des tiroirs et de faciliter l'application des couches d'enduction.

Selon une variante de réalisation du bloc d'alimentation conforme à l'invention qui se révèle particulièrement avantageuse lorsque les matières thermoplastiques mises en œuvre pour constituer la ou les couches d'enduction sont particulièrement thermosensibles chaque canal secondaire est subdivisé en deux branches arquées qui se rejoignent en amont du raccordement avec le canal central, les extrémités de chaque branche se rejoignant de préférence de façon à former entre elles un angle substantiellement égal à 180°. De cette façon, les flux de matière thermoplastique fondue destinés à former les couches d'enduction sont amenés au niveau du raccordement selon une direction qui est sensiblement parallèle à la direction de déplacement des tiroirs et l'on évite ainsi toute stagnation de matière thermoplastique fondue au niveau de ces tiroirs.

Enfin, selon une dernière variante de réalisation qui peut être avantageusement exploitée lorsque le ou les canaux secondaires sont subdivisés en deux branches, on peut équiper chaque canal secondaire, au niveau de son embranchement, d'un répartiteur réglable permettant de contrôler la quantité de matière thermoplastique fondue débitée dans chacune des deux branches. Le répartiteur peut être conçu de façon telle qu'il constitue une portion des parois des deux branches arquées. Ainsi, il est loisible de régler le répartiteur de façon soit à équilibrer les flux de matière thermoplastique fondue dans les deux branches lorsque les tiroirs correspondants sont réglés de façon symétrique par rapport à l'axe du canal central par exemple lors de la production de profilés symétriques soit à déséquilibrer les flux de matière thermoplastique fondue dans les deux branches lorsque les tiroirs correspondants sont réglés de façon asymétrique par rapport à l'axe du canal central par exemple lors de la production de profilés asymétriques. Avec le bloc d'alimentation conforme à cette variante, il est donc possible d'agir à la fois sur le réglage des tiroirs et sur le réglage du répartiteur en fonction du type de profilé désiré et, en particulier, de contrôler la largeur et le positionnement des flux de matière thermoplastique fondue débités par les canaux secondaires en fonction du recouvrement désiré sur le produit coextrudé.

Le bloc d'alimentation conforme à l'invention convient particulièrement pour alimenter une filière de coextrusion de profilés convenant pour la réalisation de châssis de portes ou de fenêtres mais il est bien évident qu'il peut également convenir pour la production d'autres types de profilés tels que de planchettes de bardage, etc et même pour la production de plaques planes ou ondulées.

Le bloc d'alimentation réglable conforme à la présente invention est, par ailleurs, explicité plus en détail dans le mode de réalisation pratique qui va être décrit et pour la description duquel on se référera aux figures des dessins annexés dans lesquelles :

- la fig. 1 est une vue en coupe et en élévation d'un bloc d'alimentation réglable conforme à l'invention

- la fig. 2 est une vue en plan et en coupe selon l'axe AA de la fig. 1.

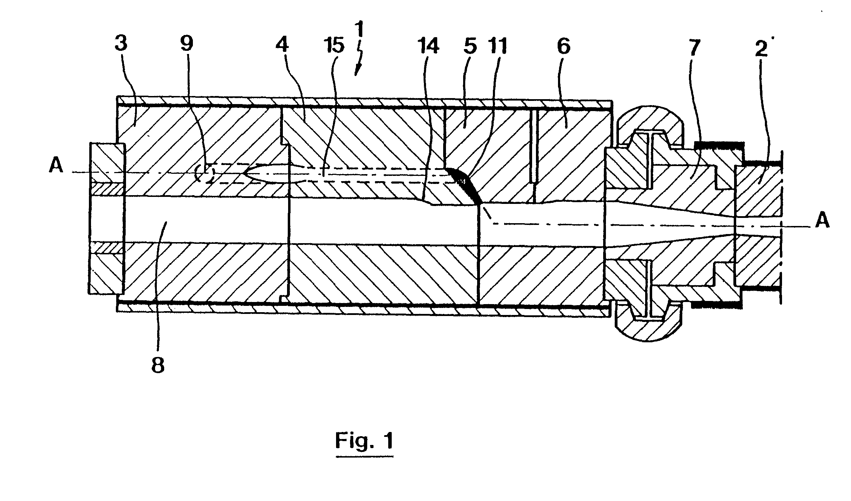

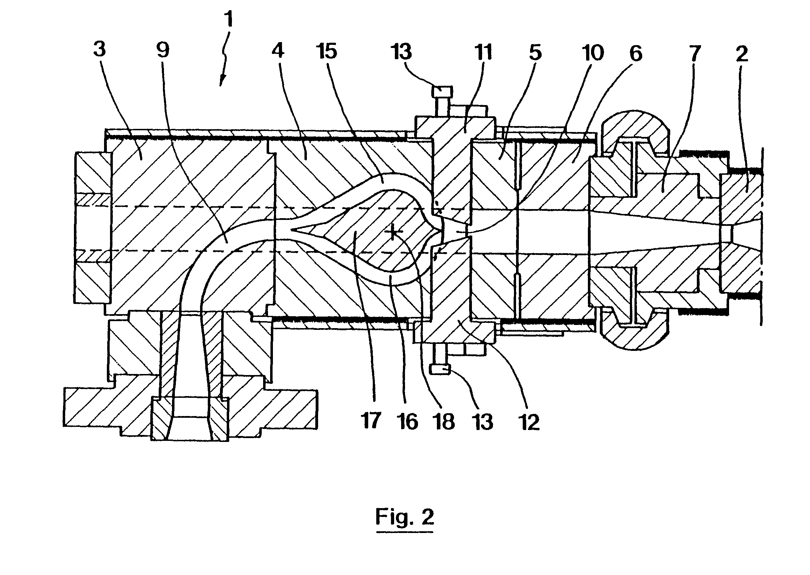

Ainsi qu'il apparaît sur les figures 1 et 2, le bloc d'alimentation réglable 1 destiné à être raccordé à une filière de coextrusion 2 partiellement représentée comporte des éléments 3, 4, 5, 6, 7 délimitant un canal central principal 8 pouvant convoyer un flux principal de matière thermoplastique fondue vers la filière 2, ce flux étant alimenté par une extrudeuse non représentée. En outre, dans le bloc d'alimentation illustré, les éléments 3, 4, 5 et 6 délimitent également un canal secondaire 9 raccordé par un coude à une seconde extrudeuse non représentée débitant un second flux de matière thermoplastique fondue destiné à former une couche d'enduction sur le flux principal de matière thermoplastique fondue. Le canal secondaire 9 est sensiblement parallèle au canal central 8 et son extrémité aval 10 est inclinée par rapport au canal central 8 et raccordée sur une portion de la périphérie de ce canal central 8. L'inclinaison entre le canal central 8 et l'extrémité du canal 9 est de l'ordre de 45°. Conformément à l'invention, le raccordement entre le canal central 8 et le canal secondaire 9 est délimité latéralement par deux tiroirs réglables 11 et 12 équipés de moyens de réglage 13 permettant de contrôler leur écartement par rapport au plan de symétrie vertical du canal central 8. Les deux tiroirs 11 et 12 peuvent se déplacer indépendamment selon une direction perpendiculaire à l'axe du canal central 8 et ainsi délimiter le positionnement et la largeur du flux de matière thermoplastique débité par le canal 9 sur le flux principal de matière thermoplastique débité par le canal central 8. Dans la position représentée, les deux tiroirs 11 et 12 sont écartés symétriquement du plan de symétrie vertical du canal central 8 et le bloc d'alimentation est réglé pour l'extrusion d'un profilé symétrique revêtu d'une couche d'enduction de largeur prédéterminable.

Le canal central 8 est de section circulaire, toutefois l'élément 4 présente un ressaut 14 qui entraîne localement un aplatissement de la section du canal central 8 au niveau du raccordement avec le canal secondaire 9 afin, d'une part, de faciliter l'application de la couche d'enduction sur le flux principal de matière thermoplastique fondue et, d'autre part, d'éviter des infiltrations de matière thermoplastique fondue au droit des tiroirs 11 et 12.

Ainsi qu'il apparaît plus particulièrement à la fig. 2, le canal secondaire 9 est subdivisé en deux branches arquées 15, 16 par l'intermédiaire d'un répartiteur 17 qui peut pivoter de façon contrôlable autour de l'axe 18. Le répartiteur 17 a une forme générale de cœur et constitue une portion des parois des deux branches arquées. Les branches arquées 15 et 16 sont profilées de façon telle que leurs extrémités se rejoignent de façon à former entre elles un angle de 180°. De cette façon, le flux de matière thermoplastique fondue débité par les branches 15 et 16 est dirigé selon une direction sensiblement parallèle à la direction de déplacement des tiroirs 11 et 12, ce qui permet de minimiser tout risque de stagnation et partant de dégradation de la matière thermoplastique fondue débitée par les branches 15 et 16.

Dans la fig. 2, le répartiteur 17 est représenté dans une position telle que les flux de matière thermoplastique fondue débités par chaque branche 15 et 16 soient équilibrés, ce qui est généralement le cas lorsque le bloc d'alimentation est raccordé à une filière 2 conformant un profilé symétrique dont une face doit être entièrement recouverte d'une couche de la matière thermoplastique d'enduction. Dans le cas où l'on désire seulement recouvrir une partie d'une des faces du profilé au moyen d'une couche d'enduction positionnée de façon prédéterminée, il convient de déplacer de façon adéquate les tiroirs 11 et 12 et éventuellement de faire pivoter de façon contrôlée le répartiteur 17 de façon à déséquilibrer les flux de matière thermoplastique fondue débités par les branches 15 et 16.

En agissant sur ces éléments 11, 12 et 17, il est donc possible de régler le bloc d'alimentation de façon telle que le profilé extrudé présente la couche d'enduction selon le positionnement et dans la largeur souhaitée.

Lorsque le bloc d'alimentation est raccordé à une filière 2 conformant un profilé asymétrique, il est également possible de régler de façon très précise la couche d'enduction en agissant sur ces mêmes éléments 11, 12 et 17.

**Revendications**

1. Bloc d'alimentation (1) réglable pour filière de coextrusion comprenant un canal central principal (8) pour convoyer un flux principal de matière thermoplastique fondue vers une filière de coextrusion et au moins un canal secondaire (9) substantiellement parallèle au canal central (8) pour convoyer une seconde matière thermoplastique fondue destinée à former une couche d'enduction locale du flux principal, l'extrémité aval (10) de chaque canal secondaire (9) étant inclinée par rapport au canal central (8) et raccordée sur une portion de la périphérie de ce canal caractérisé en ce que le raccordement entre le canal central (8) et chaque canal secondaire (9) est délimité latéralement par les extrémités de deux tiroirs réglables (11, 12) déplaçables perpendiculairement à l'axe du canal central (8).

2. Bloc d'alimentation selon la revendication 1 caractérisé en ce que l'axe du canal central (8) et les axes des extrémités aval (10) de chaque canal secondaire (9) forment entre eux un angle compris entre 30 et 60°.

3. Bloc d'alimentation selon les revendications 1 ou 2 caractérisé en ce que le canal central (8) de section substantiellement circulaire est aplati au niveau du raccordement de chaque canal secondaire.

4. Bloc d'alimentation selon les revendications 1 à 3 caractérisé en ce que chaque canal secondaire (9) est subdivisé en deux branches arquées (15, 16) qui se rejoignent en amont du raccordement avec le canal central.

5. Bloc d'alimentation selon la revendication 4 caractérisé en ce que les extrémités de chaque branche (15, 16) se rejoignent de façon à former entre elles un angle substantiellement égal à 180°.

6. Bloc d'alimentation selon la revendication 4 caractérisé en ce que chaque canal secondaire (9) est équipé, au niveau de son embranchement, d'un répartiteur réglable (17) permettant de contrôler la quantité de matière thermoplastique fondue débitée dans chacune des deux branches.

7. Bloc d'alimentation selon l'une quelconque des revendications 1 à 6 caractérisé en ce qu'il est équipé d'une filière pour la production de profilés ou de plaques planes ou ondulées.

**Claims**

1. Adjustable feed block (1) for a coextrusion die, comprising a main central channel (8) for conveying a main stream of molten thermoplastic towards a coextrusion die and at least one secondary channel (9), substantially parallel to the central channel (8), for conveying a second molten thermoplastic intended to form a local coating layer on the main stream. the downstream end (10) of each secondary channel (9) being inclined relative to the central channel (8) and connected to a portion of the periphery of the said channel, characterized in that the connection between the central channel (8) and each secondary channel (9) is laterally delimited by the ends of two adjustable slides (11, 12) which can be moved at right angles to the axis of the central channel (8).

2. Feed block according to claim 1, characterized in that the axis of the central channel (8) and the axes of the downstream ends (10) of each secondary channel (9) form an angle of from 30 to 60° between them.

3. Feed block according to claims 1 or 2, characterized in that the central channel (8) which is of substantially circular cross-section, is flattened in the zone where each secondary channel connects with the central channel.

4. Feed block according to claims 1 to 3, characterized in that each secondary channel (9) is subdivided into two curved branches (15, 16) which join together again upstream of the connection to the central channel.

5. Feed block according to claim 4, characterized in that the ends of each branch (15, 16) join together again so as to form an angle substantially equal to 180° between them.

6. Feed block according to claim 4, characterized in that each secondary channel (9) is equipped, at its branching zone with an adjustable distributor (17) which permits control of the amount of molten thermoplastic fed into each of the two branches.

7. Feed block according to any one of claims 1 to 6, characterized in that it is equipped with a die for the production of profiles or of flat or corrugated panels.


**Patentansprüche**

1. Einstellbarer Beschickungsblock (1) für eine Koextrudierdüse, umfassend einen zentralen Hauptkanal (8), um einen Hauptfluß geschmolzenen thermoplastischen Materials in Richtung einer Koextrudierdüse zu befördern, und mindestens einen zweiten Kanal (9), der im wesentlichen parallel ist zum zentralen Kanal (8), um ein zweites geschmolzenes thermoplastisches Material zu befördern, welches dazu bestimmt ist eine örtliche Überzugsschicht des Hauptflusses zu bilden, wobei das niederdruckseitige Ende (10) jedes zweiten Kanals (9) hinsichtlich des zentralen Kanals (8) geneigt ist und über eine Umfangspartie dieses Kanals angeschlossen ist, dadurch gekennzeichnet, daß die Verbindung zwischen dem zentralen Kanal (8) und jedem zweiten Kanal (9) seitlich beschränkt ist durch die Enden zweier einstellbarer Schieber (11, 12), die senkrecht zur Achse des zentralen Kanals (8) verstellbar sind.

2. Beschickungsblock nach Anspruch 1, dadurch gekennzeichnet, daß die Achse des zentralen Kanals (8) und die Achsen der niederdruckseitigen Enden (10) jedes zweiten Kanals (9) untereinander einen Winkel zwischen 30 und 60° bilden.

3. Beschickungsblock nach den Ansprüchen 1 oder 2, dadurch gekennzeichnet, daß der zentrale Kanal (8) mit im wesentlichen kreisförmigem Querschnitt auf dem Niveau der Verbindung jedes zweiten Kanals abgeflacht ist.

4. Beschickungsblock nach den Ansprüchen 1 bis 3, dadurch gekennzeichnet, daß jeder zweite Kanal (9) unterteilt ist in zwei gekrümmte Zweige (15, 16), die sich oberhalb der Verbindung mit dem zentralen Kanal wieder zusammenfügen.

5. Beschickungsblock nach Anspruch 4, dadurch gekennzeichnet, daß die Enden jedes Zweiges (15, 16) sich so wieder zusammenfügen, daß zwischen ihnen ein Winkel, der im wesentlichen gleich 180° ist, gebildet ist.

6. Beschickungsblock nach Anspruch 4, dadurch gekennzeichnet, daß jeder zweite Kanal (9) auf dem Niveau seiner Abzweigung mit einem einstellbaren Verteiler (17) ausgerüstet ist, der es gestattet, die Menge des abgegebenen geschmolzenen thermoplastischen Materials in jeden der zwei Zweige zu regeln.

7. Beschickungsblock nach einem der Ansprüche 1 bis 6, dadurch gekennzeichnet, daß er ausgerüstet ist mit einer Düse zur Herstellung von Profilen oder von ebenen oder gewellten Platten.

Fig. 1

EP 0 179 521 B1

Fig. 2